# EUROPÄISCHE PATENTSCHRIFT

(11) **EP 2 815 833 B1**
(45) Veröffentlichungstag und Bekanntmachung des Hinweises auf die Patenterteilung: **07.09.2016**
(21) Anmeldenummer: 14001596.7
(22) Anmeldetag: 06.05.2014
(51) Int. Cl.: B23D 31/00

(54) **Bruchtrennvorrichtung**
Break separator
Dispositif de séparation par rupture

(30) Priorität: 16.05.2013 DE 102013008370
(43) Veröffentlichungstag der Anmeldung: 24.12.2014
(73) Patentinhaber: Alfing Kessler Sondermaschinen GmbH, 73433 Aalen (DE)
(72) Erfinder: Müllner, Ralf, D-73760 Ostfildern (DE); Schwab, Peter, D-73431 Aalen (DE); Straub, Ulrich, D-73079 Süßen (DE)
(74) Vertreter: Patentanwälte Bregenzer und Reule Partnerschaftsgesellschaft mbB

(56) Entgegenhaltungen:
- EP-A1- 0 396 797
- US-A- 5 974 663
- US-A1- 2010 018 023

## Beschreibung

Die Erfindung betrifft eine Bruchtrennvorrichtung zum Bruchtrennen eines Motorbauteils, insbesondere eines Pleuels, gemäß dem Oberbegriff des Anspruchs 1.

Eine derartige Bruchtrennvorrichtung ist z.B. in US 2010/0018023 A1 beschrieben.

Eine weitere Bruchtrennvorrichtung ist in EP 0 661 125 A1 beschrieben. Die Bruchtrennvorrichtung weist beispielsweise einen hydraulischen Antrieb zum Antreiben des Betätigungskörpers auf. Hydraulische Antriebe können jedoch zu einer Leckage neigen.

Es ist daher die Aufgabe der vorliegenden Erfindung, eine verbesserte Bruchtrennvorrichtung bereitzustellen.

Zur Lösung der Aufgabe ist eine Bruchtrennvorrichtung gemäß des Anspruchs 1 vorgesehen. Die Erfindung betrifft ferner ein Verfahren zum Bruchtrennen eines Motorbauteils gemäß dem unabhängigen Anspruch 12.

Es ist ein Grundgedanke der vorliegenden Erfindung, anstelle eines kontinuierlichen Spreizvorgangs einen Schlagimpulsbetrieb durchzuführen, mit dem das mindestens eine Spreizelement in eine Spreizstellung zum Bruchtrennen des Motorbauteils gebracht werden kann. Ein Vorteil ist dabei, dass der Antriebsmotor, mit dem der Schlagkörper angetrieben wird, eine vergleichsweise kleine Leistung aufweisen kann. Bevorzugt ist es auf diesem Wege möglich, den Antriebsmotor als einen elektrischen Motor auszugestalten, wobei selbstverständlich auch andere Motoren, beispielsweise pneumatische Antriebe, hydraulische Antriebe oder dergleichen möglich sind. Die Krafteinleitung ist aufgrund des Impulsbetriebs besonders günstig, d.h. mit zweckmäßigerweise nur einem Schlag, gegebenenfalls wenigen weiteren Schlägen, beispielsweise insgesamt nur zwei oder drei Schlägen, kann der Betätigungskörper das Spreizelement in die Spreizstellung betätigen und somit eine Komponente vom Motorbauteil abtrennen, zum Beispiel den Pleueldeckel.

Die Spreizelementanordnung weist zweckmäßigerweise mindestens zwei Spreizelemente auf, nämlich ein erstes und ein zweites Spreizelement, zwischen denen der Betätigungskörper zumindest während des Schlagimpulsbetriebes angeordnet ist.

Es ist vorgesehen, dass ein Positionierantrieb zum Vorpositionieren des Betätigungskörpers an dem mindestens einen ersten Spreizelement vor dem Beginn des Schlagimpulsbetriebes vorgesehen ist. Der Betätigungskörper ist selbstverständlich dann, wenn weitere Spreizelemente vorgesehen sind, zwischen allen diesen Spreizelementen oder mindestens zwei der Spreizelemente im Rahmen der Vorpositionierung anordenbar.

Eine Maßnahme sieht vor, dass der Positionierantrieb zum Positionieren des Betätigungskörpers an dem mindestens einen ersten Spreizelement oder auch den weiteren Spreizelementen derart ausgestaltet ist, dass Keilflächen der Keilflächenanordnung oder auch Führungsflächen zwischen dem mindestens einem ersten Spreizelement oder den weiteren Spreizelementen und dem Betätigungskörper im Wesentlichen flächig aneinander anliegen. Die aneinander anliegenden Flächen, nämlich die Keilflächen der Keilflächenanordnung oder auch andere Flächen, nämlich beispielsweise Führungsflächen, sind dann bereits in Berührkontakt. Wenn eine Schmierung vorgesehen ist, was vorteilhaft ist, bleibt die Schmierung erhalten. Mithin ist also der Betätigungskörper an den Spreizelementen bereits geführt, bevor der Schlagimpulsbetrieb beginnt.

Zweckmäßigerweise weist die Bruchtrennvorrichtung oder eine diese aufweisende Werkzeugmaschine eine Schmiereinrichtung zum Schmieren der Keilflächenanordnung oder einer Führungsflächenanordnung oder beiden auf. Die Führungsflächen befinden sich zwischen dem oder den Spreizelementen und dem Betätigungskörper.

Die Spreizelementanordnung umfasst, wie erwähnt, vorzugsweise mindestens ein zweites Spreizelement, wobei der Betätigungskörper während des Schlagimpulsbetriebs zwischen dem mindestens einen ersten Spreizelement und dem mindestens einen zweiten Spreizelement oder weiteren Spreizelementen angeordnet ist. Es ist natürlich auch möglich, dass der Betätigungskörper nicht nur während des Schlagimpulsbetriebes, sondern auch davor oder danach zwischen den jeweiligen Spreizelementen angeordnet ist.

Der Vorteil bei mehreren Spreizelementen ist, dass die Spreizelemente in Anlage mit beispielsweise einer Widerlagerfläche außerhalb des zu bearbeitenden Motorbauteils oder auch einer Widerlagerfläche des Motorbauteils gelangen können und sich der Betätigungskörper sozusagen indirekt über die Spreizelemente an der Widerlagerfläche außerhalb des zu bearbeitenden Motorbauteils bzw. der Widerlagerfläche des Motorbauteils abstützen kann. Der Betätigungskörper kann sich aber auch beispielsweise direkt an eine Widerlagerfläche der Bruchtrennvorrichtung oder des Motorbauteils abstützen. In diesem Fall genügt beispielsweise ein einziges Spreizelement.

Der Impulsantrieb umfasst zweckmäßigerweise einen oder mehrere elektrische Antriebsmotoren oder Antriebselemente. Aber auch ein fluidischer Antrieb ist möglich, d.h. dass der Impulsantrieb einen fluidischen Antriebsmotor, zum Beispiel einen hydraulischen Antriebsmotor oder einen pneumatischen Antriebsmotor, aufweist. Besonders bevorzugt ist es, wenn der Impulsantrieb einen Linearmotor umfasst.

Die Stelleinrichtung des Linearmotors korrespondiert zweckmäßigerweise mit der Betätigungsrichtung des Betätigungskörpers.

Das Umlenkgetriebe, z.B. die Keilflächen der Keilflächenanordnung, bewirkt eine Bewegungsumlenkung von einer Stellachse des Betätigungselements zu einer Spreizrichtung oder Spreizachse, in welcher die Bruchtrenneinrichtung die erste Komponente des Motorbauteils, zum Beispiel den Pleueldeckel, von der zweiten Komponente des Motorbauteils, zum Beispiel einem Pleuelfuß, abtrennt.

Die Keilflächenanordnung, die zum Beispiel ein Keilgetriebe bildet oder umfasst, ist besonders robust. Eine Keilflächenanordnung ist daher bevorzugt.

Das Umlenkgetriebe umfasst z.B. eine Keilflächenanordnung. Das Umlenkgetriebe kann aber auch ein Kurbelgetriebe, ein Kniehebelgetriebe, ein Exzentergetriebe oder dergleichen aufweisen.

Zu den Keilflächen der Keilflächenanordnung ist festzuhalten, dass es genügt, wenn beispielsweise der Betätigungskörper eine Keilfläche aufweist, während das zugeordnete Spreizelement keine Keilfläche aufweist oder auch umgekehrt, dass das Spreizelement eine Keilfläche hat, während der Betätigungskörper ohne eine Keilfläche an dieser Keilfläche des Spreizelements entlang gleitet. Besonders bevorzugt ist jedoch, wenn Paarungen von Keilflächen vorhanden sind, d.h. dass der Betätigungskörper mit einer Keilfläche an einer Keilfläche des Spreizelements entlang beweglich gelagert ist.

Der Antriebsmotor des Impulsantriebs treibt zweckmäßigerweise den Schlagkörper über ein Getriebe an. Das Getriebe kann beispielsweise ein Kurbelgetriebe, ein Kniehebelgetriebe, ein Exzentergetriebe, ein Kugelspindelgetriebe oder Kombinationen davon umfassen. Bevorzugt bewirkt das Getriebe eine Kraftverstärkung.

Es ist auch denkbar, dass der Schlagkörper auf einem Bewegungsweg unmittelbar vor dem Aufprall auf den Abtriebskopf und mithin den Betätigungskörper von dem Impulsantrieb freikommt, d.h. dass ein Bewegungsspiel vorhanden ist, so dass der Schlagkörper quasi frei auf den Abtriebskopf aufprallen kann und nicht durch den Impulsantrieb oder dessen Antriebsmotor gebremst wird. Es kann dabei ein Vorteil sein, dass der Schlagkörper nicht unmittelbar auf beispielsweise den Antriebsmotor oder das Getriebe oder beides des Impulsantriebs rückwirkt.

Bevorzugt ist es, wenn der Abtriebskopf und der Schlagkörper mittels einer Führung aneinander linear geführt sind. Beispielsweise hat der Abtriebskopf eine Führung, an der der Schlagkörper geführt ist. Auch umgekehrt ist es möglich, dass der Schlagkörper den Abtriebskopf führt, was beim Ausführungsbeispiel in der Zeichnung dargestellt ist. Es ist allerdings auch möglich, dass der Abtriebskopf und der Schlagkörper jeweils separat und unabhängig voneinander geführt sind, jedoch relativ zueinander beweglich, um den Impulsbetrieb zu ermöglichen.

Die Spreizelemente oder das Spreizelement können beispielsweise durch eine Spreizelement-Positioniereinrichtung für den Schlagimpulsbetrieb positioniert werden. Beispielsweise sind entsprechende Servoantriebe oder dergleichen vorgesehen, die das oder die Spreizelemente in Position relativ zum zu bearbeitenden Motorbauteil bringt.

Eine bevorzugte Ausführungsform der Erfindung sieht vor, dass die Spreizelementanordnung anhand einer Spreizelement-Führungsanordnung an dem Schlagkörper oder dem Abtriebskopf oder beiden geführt ist. Es ist zum Beispiel eine gemeinsame Führung möglich, die den Schlagkörper und/oder den Abtriebskopf sowie zusätzlich auch die Spreizelementanordnung führt.

Die Spreizelementanordnung ist zweckmäßigerweise zur Anordnung in einer Lageröffnung des Motorbauteils, zum Beispiel einem Lager-Auge eines Pleuels, ausgestaltet. Die vorgenannte Spreizelement-Führungsanordnung und/oder die Spreizelement-Positioniereinrichtung sorgen für die Positionierung der Spreizelemente in der jeweiligen Lageröffnung. Bei der Lageröffnung kann es sich, wie hier deutlich wird, beispielsweise auch um eine Lageröffnung eines Motorblocks oder dergleichen handeln.

Nachfolgend werden Ausführungsbeispiele der Erfindung anhand der Zeichnung erläutert. Es zeigen:

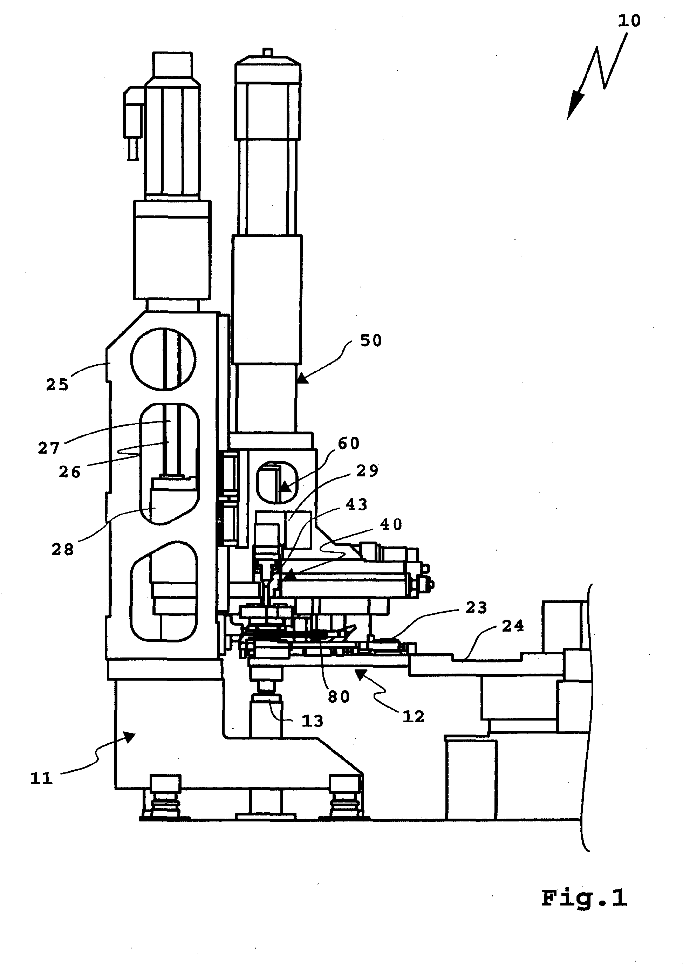

- Figur 1: eine Seitenansicht einer Werkzeugmaschine, die eine erfindungsgemäße Bruchtrennvorrichtung aufweist,

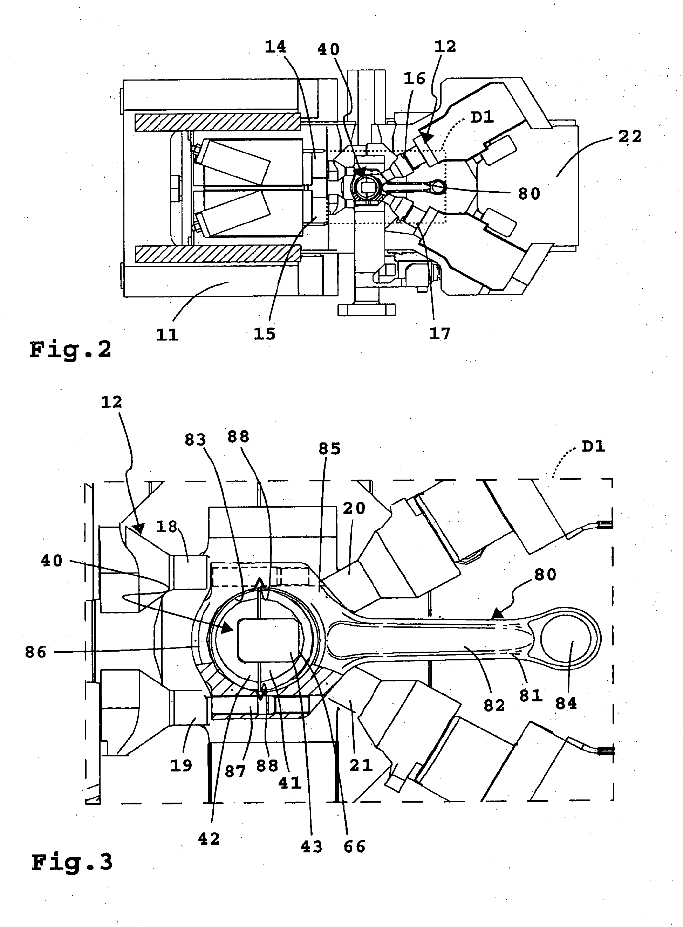

- Figur 2: eine frontale Draufsicht auf ein Unterteil der Werkzeugmaschine gemäß Figur 1 sowie eine Bruchtrennvorrichtung und eine Werkstück-Halteeinrichtung, von der in
- Figur 3: ein Detail D1 aus Figur 2 dargestellt ist,
- Figur 4: eine schematische Ansicht der Bruchtrennvorrichtung gemäß Figuren 1-3, wobei sie noch nicht in vollständigem Eingriff mit dem Motorbauteil ist,
- Figur 5: die Bruchtrennvorrichtung gemäß Figur 4, jedoch vorpositioniert an dem Motorbauteil,
- Figur 6: die Bruchtrennvorrichtung gemäß Figuren 4, 5 in einem Impulsbetrieb, und
- Figur 7: die Anordnung gemäß Figuren 4-6, wobei jedoch die beiden Komponenten des Motorbauteils bereits voneinander getrennt sind und zudem alternative Antriebsprinzipien schematisch angedeutet sind.

Eine in der Zeichnung schematisch dargestellte Werkzeugmaschine 10, die auch ein Bearbeitungszentrum oder Bestandteil eines Bearbeitungszentrums sein kann, weist eine Bruchtrennvorrichtung 40 zum Bruchtrennen von Motorbauteilen 80 auf. Man könnte die Werkzeugmaschine 10 auch als Crack-Mäschine bezeichnen.

Die Werkzeugmaschine 10 ist dazu vorgesehen, beispielsweise Pleuel 81 als Motorbauteile 80 zu bearbeiten, wobei ein alternatives Anwendungsfeld der Erfindung auch beispielsweise das Cracken von Zylinderdeckeln von einem Motorblock ist. Auch andere Werkstücke können im Prinzip nach dieser Art bruchgetrennt werden.

Die Pleuel 81 umfassen einen Pleuelschaft 82, der am einen Endbereich ein so genanntes kleines Auge 84, also eine Lagerbohrung oder Lagerausnehmung, sowie ein großes Auge 83 aufweist, ebenfalls eine Lagerbohrung oder Lagerausnehmung. Die beiden Lagerausnehmung oder Augen 83 und 84 sind beispielsweise zur drehbaren Verbindung mit einer Kurbelwelle und einem Kolben vorgesehen (nicht dargestellt).

Im Bereich des großen Auges 83 wird mit der Werkzeugmaschine 10 die nachfolgende Bearbeitung durchgeführt:
Von einem Pleuelfuß 85 wird mittels der Bruchtrennvorrichtung 40 ein Pleueldeckel 86 abgetrennt, so dass sich an den Seitenschenkeln des Pleuelfußes 85 und den Seitenschenkeln des Pleueldeckels 86, die jeweils das große Auge 83 seitlich begrenzen, Bruchtrennflächen ausbilden. Diese Bruchtrennflächen passen formschlüssig zueinander, da die Oberflächentopographie bei beiden Bruchtrennflächen im Idealfall identisch ist.

Die Werkzeugmaschine 10 und/oder das Bearbeitungszentrum können ein Kerbwerkzeug, zum Beispiel zum Laser-Kerben, aufweist, was in der Zeichnung jedoch nicht dargestellt ist. Jedenfalls sind vorteilhaft im Bereich der späteren Bruchtrennflächen oder -linien jeweils eine das Bruchtrennen erleichternde Kerbe 88 vorgesehen. Die Kerben 88 könnten aber auch schon von vorneherein an dem Pleuel 81 vorgesehen sein, beispielsweise wenn dieses als ein Gussteil oder Sinterteil hergestellt ist.

Die Werkzeugmaschine 10 umfasst eine Maschinenbasis 11, zum Beispiel ein Maschinenbett, an der eine Werkstück-Halteeinrichtung 12 angeordnet ist. Mit der Werkstück-Halteeinrichtung können Werkstücke, nämlich das Motorbauteil 80 oder das Pleuel 81, gehalten werden, während die weitere Bearbeitung durch die Bruchtrennvorrichtung 40 stattfindet. Die Werkstück-Halteeinrichtung 12 kann einen Bestandteil der Bruchtrennvorrichtung 40 bilden.

Von unten her wird das Pleuel 81 oder Motorbauteil 80 von einer Werkstück-Stützeinrichtung 13 abgestützt. Die Stützeinrichtung 13 kann direkt an dem Motorbauteil 80 angreifen, dieses also direkt abstützen, oder auch beispielsweise eine Kassette 23, in der das Motorbauteil 80/Pleuel 81 angeordnet ist.

Während der Bearbeitung durch die Bruchtrennvorrichtung 40 ist das Pleuel 81 durch seitlich wirkende Abstützeinrichtungen 14, 15, 16, 17 abgestützt, deren Stützköpfe 18, 19 beispielsweise von der Seite des Pleueldeckels 86 her stützend wirken, während die Stützkörper 20 und 21 der Abstützeinrichtungen 16, 17 von der anderen Seite, nämlich vom Pleuelfuß 85 her abstützen. Somit ist jedenfalls das Pleuel 81 während der Bruchtrenn-Bearbeitung sicher gehalten.

Die Werkzeugmaschine 10 umfasst weiterhin einen Rundtisch 22 oder eine sonstige Werkstück-Fördereinrichtung, mit der Werkstücke, nämlich Motorbauteile 80 oder Pleuel 81 der Bruchtrennvorrichtung 40 zugeführt werden können bzw. auch von der Bruchtrennvorrichtung 40 wieder weg geführt werden können. Auf dem Rundtisch 22 sind beispielsweise Kassetten 23 angeordnet.

Vor die Maschinenbasis 11 steht ein Ständer 25 nach oben vor, der beispielsweise in der Art eines Turms, eines Tragrahmens oder dergleichen ausgestaltet ist. Der Ständer 25 trägt, eine Führungsanordnung 26 oder bildet eine solche. Die Führungsanordnung 26 umfasst eine Linearführung 27, an der die Bruchtrennvorrichtung 40 linear geführt ist. Mithilfe eines Positionierantriebs 28, beispielsweise eines elektrischen Antriebs oder pneumatischen Antriebs oder fluidischen Antriebs, kann die Bruchtrennvorrichtung 40 zwischen einer unteren Arbeitsposition, in der sie zur Bearbeitung des Motorbauteils 80 oder Pleuels 81 bereitsteht und einer oberen Stellung, in der die Bruchtrennvorrichtung 40 von dem Motorbauteil 80/Pleuel 81 entfernt ist und ein Werkstückwechsel möglich ist, indem beispielsweise der Rundtisch 22 weiter schaltet und ein unbearbeitetes Werkstück zur weiteren Bearbeitung durch die Bruchtrennvorrichtung 40 zuführt, verstellt werden. Die Bruchtrennvorrichtung 40 ist z.B. an einem an der Linearführungen 27 oder der Führungsanordnung 26 linear geführten Schlitten 29 angeordnet.

Die Bruchtrennvorrichtung 40 umfasst ein erstes Spreizelement 41 und ein zweites Spreizelement 42 einer Spreizelementanordnung 48.

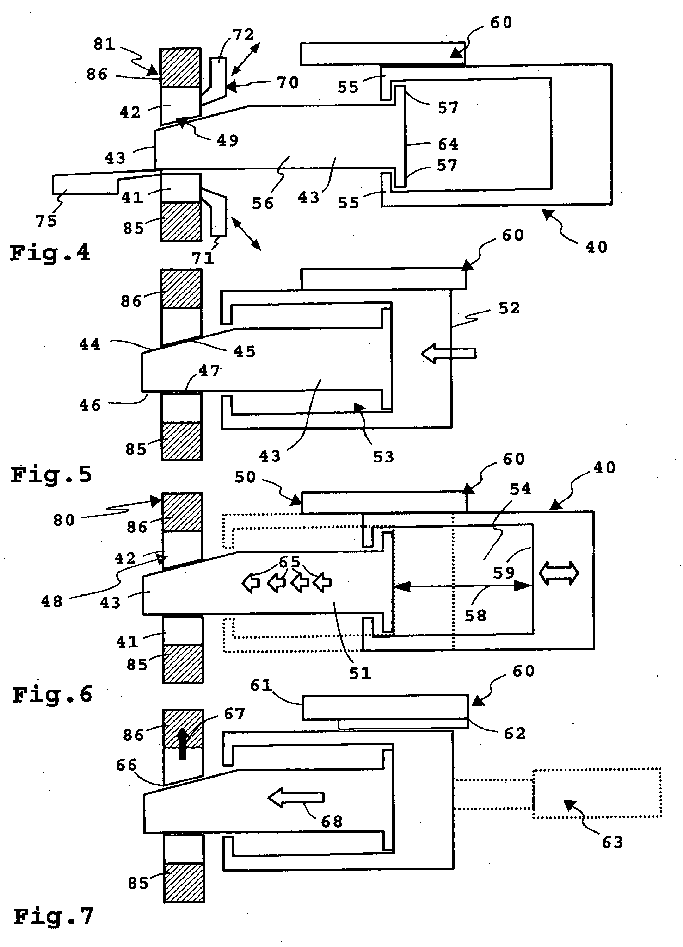

Die Spreizelemente 41, 42 sind beispielsweise durch eine Spreizelement-Positioniereinrichtung 70 in eine Arbeitsposition bringbar, z.B. in das große Auge 83 einführbar. Das ist in Figur 4 angedeutet. Die Positioniereinrichtung 70 umfasst beispielsweise Positionierelemente 71, 72, zum Beispiel Servo-Antriebe oder dergleichen, die die Spreizelemente 41, 42 in Arbeitsposition, vorliegend in das große Auge 83 hinein, verstellen.

Eine bevorzugte einfache, jedoch aus der Zeichnung nicht ohne weiteres ersichtliche, Ausführungsform kann vorsehen, dass beispielsweise der Positionierantrieb 28, wenn er die Bruchtrennvorrichtung 40 als Ganzes in die Arbeitsposition (untere Position) verstellt, die Spreizelemente 41,42 in das auf der Stützeinrichtung 13 bereitstehende Motorbauteil 80 einführt, nämlich in das große Auge 83 des Pleuels 81. Eine nicht dargestellte Spreizelement-Führungsanordnung, beispielsweise eine entsprechende Spreizelement-Halterung oder Spreizelement-Mitnahmeeinrichtung oder Spreizelement-Lagerung an dem Schlitten 29 oder dergleichen, sorgt dann für eine entsprechende geeignete Vor-Positionierung der Spreizelemente 41, 42.

Die Spreizelemente 41, 42 können durch einen Betätigungskörper 43 nach radial außen verdrängt werden, wobei sie den Pleueldeckel 86 vom Pleuelfuß 85 des Pleuels 81 abtrennen. Dann entsteht im Bereich der Kerben 88 eine Bruchtrennfläche, wie oben bereits erläutert.

Die beiden Spreizelemente 41, 42 haben eine Aussenumfangskontur, die mit einer Innenumfangskontur der Lageröffnung, des Auges 83, korrespondiert. Mithin können also die Spreizelemente 41, 42 formschlüssig passend am Innenumfang des Auges 83 anliegen. Die Spreizelemente 41, 42 bilden beispielsweise Spreizbacken.

Die Spreizelemente 41, 42 begrenzen eine Führungsaufnahme 66 zur Aufnahme und Führung des Betätigungskörpers 43.

Der Betätigungskörper 43 umfasst beispielsweise einen so genannten Spreizkeil.

An einem freien Endbereich des Betätigungskörpers 43 befindet sich eine Keilfläche 44, die mit einer Keilfläche 45 am Spreizelement 42 zusammenwirkt und an dieser anliegt. Die Keilflächen 44, 45 bilden eine Keilflächenanordnung 49.

Die Führungsaufnahme 66 umfasst also an einer Seite die Keilfläche 45. Die anderen Seiten der Innenumfangskontur der Führungsaufnahme 66 bildende Führungsflächen 47, an denen der Betätigungskörper 43 mit seinem restlichen, sich neben der Keilfläche 44 befindlichen Außenumfang entlang gleitet und geführt ist. Diese anderen Flächen des Betätigungskörpers 43 sind Führungsflächen 46.

Der Betätigungskörper 43 ist durch einen Spreizantrieb 50 antreibbar. Der Spreizantrieb 50 umfasst einen Abtriebskopf 51, an dem der Betätigungskörper 43 angeordnet ist. Der Abtriebskopf 51 ist durch einen Schlagkörper 52 antreibbar. Der Abtriebskopf 51 ist mittels einer Führung 53 am Schlagkörper 52 linear beweglich, wobei ein Längsspiel 58 vorgesehen ist. Der Schlagkörper 52 weist beispielsweise eine Führungsaufnahme 54 auf, in die ein Schaftabschnitt 56 des Betätigungskörpers 43 oder des Abtriebskopfs 51 eingreift.

Der Abtriebskopf 51 und somit der Betätigungskörper 43 ist also mit dem Längsspiel 58 an dem Schlagkörper 52 gelagert. Allerdings kann der Abtriebskopf 51 nicht aus der Führungsaufnahme 54 heraus gelangen, weil nämlich am freien Endbereich des Schlagkörpers 52 , vor den der Abtriebskopf 51 vorsteht, Längsanschläge 55 vorgesehen sind, zum Beispiel nach radial innen vorstehende Nasen. Der Abtriebskopf 51 schlägt an diesen Längsanschlägen 55 mit Längsanschlägen 57 an, die nach radial außen vor einen in der Führungsaufnahme 54 aufgenommenen Endbereich des Abtriebskopfs 51 vorstehen.

Wenn jedoch der Schlagkörper 52, der eine Schlagmasse aufweist, in eine Richtung 68 zu dem Abtriebskopf 51 hin bewegt wird, trifft er mit einer Antriebsfläche 59 auf diesen Abtriebskopf 51 im Bereich einer Abtriebsfläche 64 des Abtriebskopfs 51 auf und übt einen Schlagimpuls aus.

Der Schlagkörper 52 wird durch einen Impulsantrieb 60 angetrieben. Der Impulsantrieb 60 umfasst beispielsweise einen Antriebsmotor 61, der direkt (Figuren 4-6) oder über ein zusätzliches Getriebe 62 (Figur 7) den Schlagkörper 52 antreibt.

Alternativ wäre auch beispielsweise ein in Figur 7 dargestellter Linearantrieb 63, zum Beispiel ein pneumatischer Zylinder, ein hydraulischer Antrieb oder dergleichen anderer fluidischer Antrieb, möglich. Bei dem Linearantrieb 63 kann es sich auch um einen elektrischen Linearantrieb handeln.

Der Antriebsmotor 61 umfasst beispielsweise einen elektrischen Antriebsmotor, insbesondere einen Linearantrieb, wobei ein Drehantrieb, insbesondere in Zusammenwirkung mit dem Getriebe 62 auch möglich ist.

Das Getriebe 62 kann beispielsweise einen Kugel-Spindel-Antrieb, einen Kurbeltrieb, einen Exzentergetriebe sowie selbstverständlich auch ein Kniehebel-Getriebe umfassen.

Der Ablauf eines beispielhaften Crackens oder Bruchtrennens ist in den Figuren 4-7 angedeutet.

In dem in Figur 4 dargestellten Arbeitsschritt wird der Betätigungskörper 43 zwischen die Spreizelemente 41, 42 vorpositioniert, so dass die Keilfläche 44, 45 und die Führungsflächen 46, 47 bereits aneinander anliegen.

Zuvor oder im Zusammenhang mit dieser Vorpositionierung ist es vorteilhaft, wenn eine Schmiereinrichtung 75 die Keilflächen 44, 45 und die Führungsflächen 46, 47 schmiert. Dadurch, dass die Keilflächen 44, 45 und die Führungsflächen 46, 47 dann bereits aneinander anliegen (Figur 5), bleibt das Schmiermittel an Ort und Stelle und kann effektiv verhindern, dass beispielsweise Keilflächen 44, 45 und die Führungsflächen 46, 47 zu sehr erhitzen, gegebenenfalls sogar miteinander verschweißt werden könnten.

In dem in Figur 5 dargestellten Arbeitsschritt ist der Betätigungskörper 43 an der Spreizelementanordnung 48, d.h. zwischen den Spreizelementen 41, 42, bereits vorpositioniert, so dass der in Figur 6 dargestellte Impulsbetrieb beginnen kann. Im Rahmen dieses Impulsbetriebes übt der durch den Impulsantrieb 60 angetriebene Schlagkörper 52, den man auch als einen Antriebskörper bezeichnen könnte, Schläge auf den Abtriebskopf 51 aus, der somit den Betätigungskörper 43 mit mehreren, durch Pfeile 65 angedeutete Impulse immer weiter zwischen die Spreizelemente 41, 42 hinein treibt, so dass schließlich in einem in Figur 7 angedeuteten Schritt beispielsweise der Pleueldeckel 86 vom Pleuelfuß 5 und 80 abgesprengt wird, angedeutet durch einen Pfeil 67.

Die Keilflächenanordnung 49 bewirkt eine Bewegungsrichtungsumlenkung von der Richtung 68 , die man auch als Antriebsrichtung, des Impulsantriebs 60 bzw. des Schlagkörpers 52 bezeichnen kann, in die Richtung des Pfeils 67, also sozusagen die Spreiz-Richtung.

## Patentansprüche

1. Bruchtrennvorrichtung zum Bruchtrennen eines Motorbauteils (80), insbesondere eines Pleuels (81), mit einer Spreizelementanordnung (48) mit mindestens einem ersten Spreizelement (41) und einem Betätigungskörper (43) zum Betätigen des mindestens einen ersten Spreizelements (41) in eine Spreizstellung zum Abtrennen einer ersten Komponente des Motorbauteils (80), insbesondere eines Pleueldeckels (86), von einer zweiten Komponente des Motorbauteils (80), insbesondere einem Pleuelfuß (85), wobei zwischen dem Betätigungskörper (43) und dem mindestens einen ersten Spreizelement (41) ein Umlenkgetriebe, insbesondere eine Keilflächenanordnung (49), vorgesehen ist und der Betätigungskörper (43) durch einen Spreizantrieb (50) der Bruchtrennvorrichtung antreibbar ist, wobei der Betätigungskörper (43) an einem Abtriebskopf (51) des Spreizantriebs (50) angeordnet ist und der Spreizantrieb (50) einen relativ zu dem Abtriebskopf (51) beweglichen, eine Schlagmasse aufweisenden Schlagkörper (52) zum Erzeugen mindestens eines Schlages auf den Abtriebskopf (51) aufweist, und wobei der Spreizantrieb (50) einen Impulsantrieb (60) zum Antreiben des Schlagkörpers (52) zu dem Abtriebskopf (51) hin im Rahmen eines Schlagimpulsbetriebs der Bruchtrennvorrichtung (40) umfasst, **dadurch gekennzeichnet, dass** sie einen von dem Spreizantrieb (50) gebildeten Positionierantrieb zum Vorpositionieren des Betätigungskörpers (43) an dem mindestens einen ersten Spreizelement (41) anhand des Schlagkörpers (52) vor dem Beginn des Schlagimpulsbetriebs aufweist, und dass der Positionierantrieb zum Positionieren des Betätigungskörpers (43) an dem mindestens einen ersten Spreizelement (41) derart, dass Keilflächen (44, 45) der Keilflächenanordnung (49) und/oder Führungsflächen zwischen dem mindestens einen ersten Spreizelement (41) und dem Betätigungskörper (43) im Wesentlichen flächig aneinander anliegen, ausgestaltet ist.

2. Bruchtrennvorrichtung nach einem der vorhergehenden Ansprüche, **dadurch gekennzeichnet, dass** sie eine Schmiereinrichtung (75) zum Schmieren der Keilflächenanordnung (49) und/oder einer Führungsflächenanordnung zwischen dem mindestens einen ersten Spreizelement (41) und dem Betätigungskörper (43) aufweist.

3. Bruchtrennvorrichtung nach einem der vorhergehenden Ansprüche, **dadurch gekennzeichnet, dass** die Spreizelementanordnung (48) mindestens ein zweites Spreizelement (42) aufweist und der Betätigungskörper (43) während des Schlagimpulsbetriebs zwischen dem mindestens einen ersten Spreizelement (41) und dem mindestens einen zweiten Spreizelement (42) angeordnet ist.

4. Bruchtrennvorrichtung nach einem der vorhergehenden Ansprüche, **dadurch gekennzeichnet, dass** der Impulsantrieb (60) einen elektrischen Antriebsmotor (61) und/oder einen fluidischen Antriebsmotor (61), insbesondere einen hydraulischen Antriebsmotor (61), und/oder einen Linearmotor, insbesondere einen elektrischen Linearantrieb (63), umfasst.

5. Bruchtrennvorrichtung nach Anspruch 4, **dadurch gekennzeichnet, dass** der Antriebsmotor (61) des Impulsantriebs (60) den Schlagkörper (52) über ein Getriebe (62), insbesondere ein Kurbelgetriebe und/oder ein Kniehebelgetriebe und/oder ein Exzentergetriebe und/oder ein Kugelspindelgetriebe, antreibt.

6. Bruchtrennvorrichtung nach einem der vorhergehenden Ansprüche, **dadurch gekennzeichnet, dass** zwischen dem Impulsantrieb (60) und dem Schlagkörper (52) ein Bewegungsspiel vorgesehen ist derart, dass der Schlagkörper (52) vor dem Aufprall auf den Abtriebskopf (51) oder den Betätigungskörper (43) von dem Impulsantrieb (60), insbesondere dessen Antriebsmotor (61) und/oder dessen Getriebe (62), freikommt und frei auf den Abtriebskopf (51) aufprallen kann.

7. Bruchtrennvorrichtung nach einem der vorhergehenden Ansprüche, **dadurch gekennzeichnet, dass** der Abtriebskopf (51) und der Schlagkörper (52) mittels einer Führung (53) aneinander linear geführt sind.

8. Bruchtrennvorrichtung nach einem der vorhergehenden Ansprüche, **dadurch gekennzeichnet, dass** sie eine Spreizelement-Positioniereinrichtung (70) zur Positionierung der Spreizelementanordnung (48) für den Schlagimpulsbetrieb aufweist.

9. Bruchtrennvorrichtung nach einem der vorhergehenden Ansprüche, **dadurch gekennzeichnet, dass** die Spreizelementanordnung (48) anhand einer Spreizelement-Führungsanordnung an dem Schlagkörper (52) und/oder dem Abtriebskopf (51) geführt ist.

10. Bruchtrennvorrichtung nach einem der vorhergehenden Ansprüche, **dadurch gekennzeichnet, dass** die Spreizelementanordnung (48) zur Anordnung in einer Lageröffnung des Motorbauteils (80), insbesondere in einem Auge (83) eines Pleuels (81), ausgestaltet ist.

11. Bruchtrennvorrichtung nach einem der vorhergehenden Ansprüche, **dadurch gekennzeichnet, dass** sie einen Bestandteil einer Werkzeugmaschine (10) und/oder eines Bearbeitungszentrums bildet.

12. Verfahren zum Bruchtrennen eines Motorbauteils (80), insbesondere eines Pleuels (81), mit einer Spreizelementanordnung (48) mit mindestens einem ersten Spreizelement (41) und einem Betätigungskörper (43) zum Betätigen des mindestens einen ersten Spreizelements (41) in eine Spreizstellung zum Abtrennen einer ersten Komponente des Motorbauteils (80), insbesondere eines Pleueldeckels (86), von einer zweiten Komponente des Motorbauteils (80), insbesondere einem Pleuelfuß (85), wobei zwischen dem Betätigungskörper (43) und dem mindestens einen ersten Spreizelement (41) ein Umlenkgetriebe, insbesondere eine Keilflächenanordnung (49), vorgesehen ist und der Betätigungskörper (43) durch einen Spreizantrieb (50) antreibbar ist, mit dem Schritt:
- Erzeugen von Schlägen auf einen Abtriebskopf (51) des Spreizantriebs (50), an dem der Betätigungskörper (43) angeordnet ist, anhand eines relativ zu dem Abtriebskopf (51) beweglichen, eine Schlagmasse aufweisenden Schlagkörpers (52) und anhand eines Impulsantrieb (60) des Spreizantriebs (50) zum Antreiben des Schlagkörpers (52) zu dem Abtriebskopf (51) hin im Rahmen eines Schlagimpulsbetriebs der Bruchtrennvorrichtung (40),
**gekennzeichnet durch** den Schritt
- Vorpositionieren des Betätigungskörpers (43) an dem mindestens einen ersten Spreizelement (41) anhand des Schlagkörpers (52) vor dem Beginn des Schlagimpulsbetriebs **durch** einen von dem Spreizantrieb (50) gebildeten Positionierantrieb, wobei vorgesehen ist, dass der Positionierantrieb den Betätigungskörper (43) an dem mindestens einen ersten Spreizelement (41) derart positioniert, dass Keilflächen (44, 45) der Keilflächenanordnung (49) und/oder Führungsflächen zwischen dem mindestens einen ersten Spreizelement (41) und dem Betätigungskörper (43) im Wesentlichen flächig aneinander anliegen.

## Claims

1. Fracture-splitting apparatus for the fracture-splitting of an engine component (80), in particular a connecting rod (81), with a spreader element assembly (48) with at least one first spreader element (41) and an actuating body (43) for actuating the first spreader element or elements (41) to separate a first component of the engine component (80), in particular a connecting rod cover (86), from a second component of the engine component (80), in particular a connecting rod big end (85), wherein there is provided between the actuating body (43) and the first spreader element or elements (41) a deflecting mechanism, in particular a wedge surface assembly (49), and the actuating body (43) may be driven by a spreader drive (50) of the fracture-splitting apparatus, wherein the actuating body (43) is mounted on an output head (51) of the spreader drive (50) and the spreader drive (50) has an impact body (52) with an impact weight, movable relative to the output head (51), for generating at least one impact on the output head (51), and wherein the spreader drive (50) includes an impulse drive (60) for driving the impact body (52) towards the output head (51) in the course of impact pulse operation of the fracture-splitting apparatus (40), **characterised in that** it has a positioning drive formed by the spreader drive (50) for pre-positioning the actuating body (43) on the first spreader element or elements (41) with the aid of the impact body (52) before the start of impact pulse operation, and that the positioning drive is designed for positioning the actuating body (43) on the first spreader element or elements (41) in such a way that wedge surfaces (44, 45) of the wedge surface assembly (49) and/or guide surfaces between the first spreader element or elements (41) and the actuating body (43) abut one another substantially flatly.

2. Fracture-splitting apparatus according to any of the preceding claims, **characterised in that** it has a lubricator (75) for lubricating the wedge surface assembly (49) and/or a guide surface arrangement between the first spreader element or elements (41) and the actuating body (43).

3. Fracture-splitting apparatus according to any of the preceding claims, **characterised in that** the spreader element assembly (48) has at least one second spreader element (42), and the actuating body (43) is arranged during impact pulse operation between the first spreader element or elements (41) and the second spreader element or elements (42).

4. Fracture-splitting apparatus according to any of the preceding claims, **characterised in that** the impulse drive (60) includes an electrical drive motor (61) and/or a fluidic drive motor (61), in particular an hydraulic drive motor (61), and/or a linear motor, in particular an electrical linear drive (63).

5. Fracture-splitting apparatus according to claim 4, **characterised in that** the drive motor (61) of the impulse drive (60) drives the impact body (52) via a gear (62), in particular a crank mechanism and/or a toggle mechanism and/or an eccentric gear and/or a ball screw drive.

6. Fracture-splitting apparatus according to any of the preceding claims, **characterised in that** freedom of movement is provided between the impulse drive (60) and the impact body (52) such that the impact body (52), before impact on the output head (51) or the actuating body (43), releases from the impulse drive (60), in particular its drive motor (61) and/or its linear drive (63), and is able to impact freely on the output head (51).

7. Fracture-splitting apparatus according to any of the preceding claims, **characterised in that** the output head (51) and the impact body (52) have linear guidance on one another by a guide (53).

8. Fracture-splitting apparatus according to any of the preceding claims, **characterised in that** it has a spreader element positioning device (70) for positioning the spreader element assembly (48) for impact pulse operation.

9. Fracture-splitting apparatus according to any of the preceding claims, **characterised in that** the spreader element assembly (48) is guided on the impact body (52) and/or the output head (51) with the aid of the spreader element drive assembly.

10. Fracture-splitting apparatus according to any of the preceding claims, **characterised in that** the spreader element assembly (48) is designed for locating in a bearing opening of the engine component (80), in particular in an eye (83) of a connecting rod (81).

11. Fracture-splitting apparatus according to any of the preceding claims, **characterised in that** it forms part of a machine tool (10) and/or a machining centre.

12. Method for the fracture-splitting of an engine component (80), in particular a connecting rod (81), with a spreader element assembly (48) with at least one first spreader element (41) and an actuating body (43) for actuating the first spreader element or elements (41) to separate a first component of the engine component (80), in particular a connecting rod cover (86), from a second component of the engine component (80), in particular a connecting rod big end (85), wherein there is provided between the actuating body (43) and the first spreader element or elements (41) a deflecting mechanism, in particular a wedge surface assembly (49), and the actuating body (43) may be driven by a spreader drive (50), with the step:
- generation of impacts on an output head (51) of the spreader drive (50) on which the actuating body (43) is mounted, with the aid of an impact body (52) with an impact weight, movable relative to the output head (51), and with the aid of an impulse drive (60) of the spreader drive (50) for driving the impact body (52) towards the output head (51) in the course of impact pulse operation of the fracture-splitting apparatus (40),
**characterised by** the step:
- pre-positioning the actuating body (43) on the first spreader element or elements (41) with the aid of the impact body (52) before the start of impact pulse operation, by means of a positioning drive formed by the spreader drive (50), wherein it is provided that the positioning drive positions the actuating body (43) on the first spreader element or elements (41) in such a way that wedge surfaces (44, 45) of the wedge surface assembly (49) and/or guide surfaces between the first spreader element or elements (41) and the actuating body (43) abut one another substantially flatly.

## Revendications

1. Dispositif de séparation par rupture servant à séparer par rupture un composant de moteur (80), en particulier une bielle (81), comprenant un ensemble d'éléments écarteurs (48) pourvu au moins d'un premier élément écarteur (41) et d'un corps d'actionnement (43) servant à actionner l'au moins un premier élément écarteur (41) dans une position d'écartement afin de retirer une première composante du composant de moteur (80), en particulier un couvercle de bielle (86), d'une deuxième composante du composant de moteur (80), en particulier un pied de bielle (85), dans lequel est prévu un engrenage de déviation, en particulier un ensemble de surfaces biseautées (49) entre le corps d'actionnement (43) et l'au moins un premier élément écarteur (41) et le corps d'actionnement (43) peut être entraîné par un entraînement d'écartement (50) du dispositif de séparation par rupture, dans lequel le corps d'actionnement (43) est disposé au niveau d'une tête de sortie (51) de l'entraînement d'écartement (50) et l'entraînement d'écartement (50) présente un corps de percussion (52) mobile par rapport à la tête de sortie (51), présentant une masse de percussion, servant à produire au moins une percussion sur la tête de sortie (51), et dans lequel l'entraînement d'écartement (50) comprend un entraînement à impulsion (60) servant à entraîner le corps de percussion (52) en direction de la tête de sortie (51) dans le cadre d'un fonctionnement à impulsion de percussion du dispositif de séparation par rupture (40), **caractérisé en ce que** le corps de séparation par rupture présente un entraînement de positionnement formé par l'entraînement d'écartement (50) servant à positionner au préalable le corps d'actionnement (43) au niveau de l'au moins un premier élément écarteur (41) à l'aide du corps de percussion (52) avant le début du fonctionnement à impulsion de percussion, et **en ce que** l'entraînement de positionnement est configuré afin de positionner le corps d'actionnement (43) au niveau de l'au moins un premier élément écarteur (41) de telle manière que des surfaces biseautées (44, 45) de l'ensemble de surfaces biseautées (49) et/ou des surfaces de guidage reposent sensiblement à plat les unes contre les autres entre l'au moins un premier élément écarteur (41) et le corps d'actionnement (43).

2. Dispositif de séparation par rupture selon l'une quelconque des revendications précédentes, **caractérisé en ce que** ledit dispositif de séparation par rupture présente un système de lubrification (75) servant à lubrifier l'ensemble de surfaces biseautées (49) et/ou un ensemble de surfaces de guidage entre l'au moins un premier élément écarteur (41) et le corps d'actionnement (43).

3. Dispositif de séparation par rupture selon l'une quelconque des revendications précédentes, **caractérisé en ce que** l'ensemble d'éléments écarteurs (48) présente au moins un deuxième élément écarteur (42), et **en ce que** le corps d'actionnement (43) est disposé au cours du fonctionnement à impulsion de percussion entre l'au moins un premier élément écarteur (41) et l'au moins un deuxième élément écarteur (42).

4. Dispositif de séparation par rupture selon l'une quelconque des revendications précédentes, **caractérisé en ce que** l'entraînement à impulsion (60) comprend un moteur d'entraînement (61) électrique et/ou un moteur d'entraînement (61) fluidique, en particulier un moteur d'entraînement (61) hydraulique, et/ou un moteur linéaire, en particulier un entraînement linéaire (63) électrique.

5. Dispositif de séparation par rupture selon la revendication 4, **caractérisé en ce que** le moteur d'entraînement (61) de l'entraînement à impulsion (60) entraîne le corps de percussion (52) par l'intermédiaire d'un engrenage (62), en particulier d'un engrenage à vilebrequin et/ou d'un engrenage à levier coudé et/ou d'un engrenage excentrique et/ou d'un engrenage à vis à billes.

6. Dispositif de séparation par rupture selon l'une quelconque des revendications précédentes, **caractérisé en ce qu'**un jeu de déplacement est prévu entre l'entraînement à impulsion (60) et le corps de percussion (52) de telle manière que le corps de percussion (52) se dégage librement, avant de heurter la tête de sortie (51) ou le corps d'actionnement (43), de l'entraînement à impulsion (60), en particulier de son moteur d'entraînement (61) et/ou de son engrenage (62) et peut heurter librement la tête de sortie (51).

7. Dispositif de séparation par rupture selon l'une quelconque des revendications précédentes, **caractérisé en ce que** la tête de sortie (51) et le corps de percussion (52) sont guidés l'un contre l'autre de manière linéaire au moyen d'un guidage (53).

8. Dispositif de séparation par rupture selon l'une quelconque des revendications précédentes, **caractérisé en ce qu'**il présente un système de positionnement d'élément écarteur (70) servant à positionner l'ensemble d'éléments écarteurs (48) pour le fonctionnement à impulsion de percussion.

9. Dispositif de séparation par rupture selon l'une quelconque des revendications précédentes, **caractérisé en ce que** l'ensemble d'éléments écarteurs (48) est guidé, à l'aide d'un ensemble de guidages d'élément écarteur, au niveau du corps de percussion (52) et/ou au niveau de la tête de sortie (51).

10. Dispositif de séparation par rupture selon l'une quelconque des revendications précédentes, **caractérisé en ce que** l'ensemble d'éléments écarteurs (48) est configuré afin d'être disposé dans une ouverture de montage du composant de moteur (80), en particulier dans un oeillet (83) d'une bielle (81).

11. Dispositif de séparation par rupture selon l'une quelconque des revendications précédentes, **caractérisé en ce qu'**il forme un élément constitutif d'une machine-outil (10) et/ou d'un centre d'usinage.

12. Procédé servant à séparer par rupture un composant de moteur (80), en particulier une bielle (81), comprenant un ensemble d'éléments écarteurs (48) pourvu au moins d'un premier élément écarteur (41) et d'un corps d'actionnement (43) servant à actionner l'au moins un premier élément écarteur (41) dans une position d'écartement afin de retirer une première composante du composant de moteur (80), en particulier un couvercle de bielle (86), d'une deuxième composante du composant de moteur (80), en particulier un pied de bielle (85), dans lequel est prévu un engrenage de déviation, en particulier un ensemble de surfaces biseautées (49) entre le corps d'actionnement (43) et l'au moins un premier élément écarteur (41) et le corps d'actionnement (43) peut être entraîné par un entraînement d'écartement (50), ledit procédé comprenant l'étape consistant à :
- produire des percussions sur une tête de sortie (51) de l'entraînement d'écartement (50), au niveau duquel le corps d'actionnement (43) est disposé, à l'aide d'un corps de percussion (52) mobile par rapport à la tête de sortie (51), présentant une masse de percussion, et à l'aide d'un entraînement à impulsion (60) de l'entraînement d'écartement (50) servant à entraîner le corps de percussion (52) en direction de la tête de sortie (51) dans le cadre d'un fonctionnement à impulsion de percussion du dispositif de séparation par rupture (40),
**caractérisé par** l'étape consistant à :
- positionner au préalable le corps d'actionnement (43) au niveau de l'au moins un premier élément écarteur (41) à l'aide du corps de percussion (52) avant le début du fonctionnement à impulsion de percussion par un entraînement de positionnement formé par l'entraînement d'écartement (50), dans lequel il est prévu que l'entraînement de positionnement positionne le corps d'actionnement (43) au niveau de l'au moins un premier élément écarteur (41) de telle manière que des surfaces biseautées (44, 45) de l'ensemble de surfaces biseautées (49) et/ou des surfaces de guidage reposent les unes contre les autres sensiblement à plat entre l'au moins un premier élément écarteur (41) et le corps d'actionnement (43).
